## Europäisches Patentamt

## European Patent Office

## Office européen des brevets

(1) Publication number: **0 120 696**
**B1**

(12) **EUROPEAN PATENT SPECIFICATION**

(45) Date of publication of patent specification: **10.06.87**

(51) Int. Cl.⁴: **H 04 N 5/782, G 11 B 5/027**

(21) Application number: **84302014.0**

(22) Date of filing: **26.03.84**

(54) Recording apparatus for recording a video signal obtained from a high speed scanning video camera.

(30) Priority: **25.03.83 JP 49761/83**
**08.04.83 JP 62703/83**

(43) Date of publication of application:
**03.10.84 Bulletin 84/40**

(45) Publication of the grant of the patent:
**10.06.87 Bulletin 87/24**

(84) Designated Contracting States:
**AT DE FR GB NL**

(56) References cited:
**EP-A-0 072 507**
**AT-B- 364 393**
**DE-A-2 745 337**
**DE-B-1 474 487**
**DE-B-2 237 255**
**US-A-4 280 151**

(73) Proprietor: **SONY CORPORATION**
**7-35 Kitashinagawa 6-Chome Shinagawa-ku**
**Tokyo 141 (JP)**

(72) Inventor: **Ninomiya, Takeshi c/o Sony**
**Corporation**
**Patents Division 7-35 Kitashinagawa 6-chome**
**Shinagawa-ku Tokyo (JP)**

(74) Representative: **Cotter, Ivan John et al**
**D. YOUNG & CO. 10 Staple Inn**
**London WC1V 7RD (GB)**

Courier Press, Leamington Spa, England.

**Description**

This invention relates to recording apparatus for recording a video signal obtained from a high speed scanning video camera.

It is known to use a high speed film camera as an apparatus for picking up and recording a phenomenon moving at high speed. The high speed film camera is however subject to the defect that a phenomenon moving at high speed, which has been recorded by the camera, cannot be reproduced immediately. To remove the above defect, various researches and technical developments have been made in which a phenomenon moving at high speed is picked up by a television camera, recorded by a video tape recorder (VTR) or the like, and then reproduced immediately.

As is known well, it takes at least 1/60 of a second for an ordinary television camera to convert a single picture to an electrical signal. Accordingly, it is impossible for the television camera to pick up a moving object which moves so fast that its image changes at a speed greater than 1/60 of a second. To solve this problem, a technique is disclosed in, for example, the published specification of Japanese Patent Application (examined) No. 26416/1977 in which the visual field of a pickup tube is divided into a plurality of sections, the whole of an object is then placed in each one of the sections and the object image on the pickup tube is scanned during a scanning period of time corresponding to each section to thereby enable a phenomenon moving at high speed to be picked up.

Further, in the published specification of Japanese Patent Application (examined) No. 13631/1980 there is disclosed a technique in which an optical image of an object is sequentially projected onto a plurality of pickup tubes having an accumulation effect at every constant interval during a constant time period, and the video signals from the respective pickup tubes are respectively supplied to a plurality of recording apparatuses to thereby successively record the time image of a phenomenon moving at high speed.

In addition, in the published specification of Japanese Patent Application (unexamined) No. 2119/1977 there is disclosed a technique in which two image pickup elements or imagers are employed and deflections thereof are mutually displaced by every $\frac{1}{2}$ frame to thereby produce a video signal of high speed at twice the frame speed.

However, according to the technique disclosed in the published specification of Japanese Patent Application (examined) No. 26416/1977, since the visual field is substantially narrowed, only the image of the periphery of the moving object is obtained. Also, since the movable range of the moving object is confined within the one divided section, this technique is not suitable for general use. According to the technique disclosed in the published specification of Japanese Patent Application (examined) No. 13631/1980, since a plurality of image elements having an accumulation effect and a plurality of recording apparatuses are required, the arrangement thereof becomes complicated, which results in significant inconvenience in practical use. Furthermore, since the technique disclosed in the published specification of Japanese Patent Application (unexamined) No. 2119/1977 requires a plurality of image pickup elements and the recorded pattern on a magnetic tape becomes special (non-standard), the recorded tape has no compatibility.

US Patent No. US—A—4 280 151 discloses a recording apparatus for recording on a magnetic recording tape a video signal obtained from a high speed video camera, the apparatus comprising means for driving the magnetic recording tape at a tape speed faster than that of a standard type of video signal recording apparatus, means for providing a plurality of channel video signals derived from an image received by the video camera, means for modulating the channel video signals, and means for recording the modulated channel video signals on video tracks formed on the recording tape by a corresponding plurality of magnetic transducer heads mounted on a cylindrical surface of a rotary drum. The video camera includes a two-dimensional arrangement of a plurality of photosensitive elements and a self-scanning type solid-state image sensing device (such as a charge coupled device) typically including an array of 486 by 392 elements. The 486 lines of video data are used to constitute 486 video signal channels which are processed simultaneously and fed to corresponding recording heads. In one of the disclosed arrangements, 540 recording heads are provided. This division of the video signal into simultaneously processed line channels requires a very large number of parallel channel circuits to be provided, as well as a very large number of recording heads.

In addition, it might be considered that a video signal picked up by a television camera at a scanning speed which is a plurality of times (N) higher than the ordinary scanning speed could be recorded as it is by using a VTR. In that case, it would be necessary to set the speed of revolution of a rotary drum of the tape guide drum at N times its standard value and to set the tape transport speed at N times its standard value. This, however, will cause the following problems.

(1) In order to rotate the rotary drum of the tape guide drum at a speed of revolution equal to N times its standard speed of revolution, it is necessary to set both the carrier frequency of FM-modulation (frequency modulation) and the base band frequency at values N times higher than their standard values. However, in this case, although the signal recorded at a speed N times higher than the standard value must be reproduced at the normal speed, it is quite difficult to secure a corresponding relationship between the emphasis and de-emphasis and the characteristics of the recording and reproducing circuits with the frequency stability or the like of the frequency modulated signal frequency. In addition, the recorded tape has no compatibility.

# 0 120 696

(2) Since the frequency modulated carrier frequency becomes N times the normal value, the impedance of the rotary magnetic head, the characteristic of the rotary transformer and so on make it in fact quite difficult to increase the value N.

(3) If the speed of revolution of the rotary drum of the tape guide drum is set to N times the normal value, there is a possibility that the contact pressure of the rotary magnetic head on the magnetic tape will be lowered by a so-called air film to lower the recording sensitivity.

According to one aspect of the present invention there is provided a recording apparatus for recording on a magnetic recording tape a video signal obtained from a high speed video camera, the apparatus comprising:

means for driving the magnetic recording tape at a tape speed faster than that of a standard type of video signal recording apparatus;

means for providing a plurality of channel video signals derived from an image received by the video camera;

means for modulating the channel video signals; and

means for recording the modulated channel video signals on video tracks formed on the recording tape by a corresponding plurality of magnetic transducer heads mounted on a cylindrical surface of a rotary drum; characterised in that:

the video signal to be recorded is obtained from a high speed scanning video camera having a scanning speed which is N times (N is an integer) the scanning speed of a standard video camera that generates a standard television video signal;

the driving means is operative to drive the magnetic recording tape at a tape speed which is N times that of the standard type of video signal recording apparatus;

means are provided for converting the video signal to a digital video signal;

means are provided for dividing the digital video signal to form a plurality of channel digital video signals;

means are provided for expanding a time axis of each of the plurality of channel digital video signals;

means are provided for converting each of the time axis-expanded digital video signals to an analog video signal before modulation so that each of the analog video signals has the same frequency band as that of the standard television video signal; and

the recording means is operative to record the modulated analog video signals on succeeding video tracks formed on the recording tape by N magnetic transducer heads, a diameter and a helix angle of the rotary drum being smaller and larger, respectively, than those of the standard type of video signal recording apparatus, so that the track angle of the succeeding video tracks is made equal to that of the standard type of video signal recording apparatus.

According to another aspect of the invention there is provided a recording apparatus for recording on a magnetic recording tape a video signal obtained from a high speed video camera, the apparatus comprising:

means for driving the magnetic recording tape at a tape speed faster than that of a standard type of video signal recording apparatus;

means for providing a plurality of channel video signals derived from an image received by the video camera;

means for modulating the channel video signals; and

means for recording the modulated channel video signals on video tracks formed on the recording tape by a corresponding plurality of magnetic transducer heads mounted on a cylindrical surface of a rotary drum; characterised in that:

the video signal to be recorded is obtained from a high speed scanning video camera having a scanning speed which is NM times (N and M are integers) the scanning speed of a standard video camera that generates a standard television video signal;

means are provided for changing the value of M;

the driving means is operative to drive the magnetic recording tape at a tape speed which is NM times that of the standard type of video signal recording apparatus;

means are provided for converting the video signal to a digital video signal;

means are provided for dividing the digital video signal to form a plurality of channel digital video signals;

means are provided for expanding a time axis of each of the plurality of channel digital video signals;

means are provided for converting each of the time axis-expanded digital video signals to an analog video signal before modulation so that each of the analog video signals has the same frequency band as that of the standard television video signal;

the recording means is operative to record the modulated analog video signals on succeeding video tracks formed on the recording tape by mN (m is an integer) magnetic transducer heads, a diameter and a helix angle of the rotary drum being smaller and larger, respectively, than those of the standard type of video signal recording apparatus, so that the track angle of the succeeding video tracks is made equal to that of the standard type of video signal recording apparatus; and

means are provided for driving the rotary drum at a speed of rotation which is M/m times the speed of rotation of the standard type of video signal recording apparatus.

3

Preferred embodiments of the present invention described hereinbelow provide a recording apparatus for recording a video signal obtained from a high speed scanning video camera which can easily pick up and record a phenomenon moving at high speed by using a television camera and a video tape recorder (VTR). Further, the preferred embodiments provide a recording apparatus for recording a video signal obtained from a high speed scanning video camera which is compatible with a VTR of a standard type, for example the C-format of the SMPTE (Society of Motion Picture and Television Engineers). More specifically, the preferred recording apparatus can easily pick up and record a phenomenon moving at high speed by using a television camera and a VTR, a tape recorded by the VTR being capable of being reproduced by a conventional VTR of SMPTE standard type (C-format).

The invention will now be further described, by way of illustrative and non-limiting example, with reference to the accompanying drawings, in which like references designate like elements and parts throughout, and in which:

Figure 1 is a block diagram showing a recording apparatus embodying the invention for recording a video signal obtained from a high speed scanning video camera;

Figure 2 is a timing chart of write and read timings of a memory, useful for explaining the operation of the recording apparatus shown in Figure 1;

Figures 3A and 3B are plan and side views, respectively, of a tape guide drum used in the recording apparatus shown in Figure 1;

Figures 4 and 5 are respective vector diagrams useful for explaining the operation of the recording apparatus shown in Figure 1;

Figure 6 is a diagram of a recorded pattern on a tape produced by the recording apparatus shown in Figure 1;

Figure 7 is a block diagram showing a main part of another recording apparatus embodying the invention;

Figure 8 is a timing chart of write and read timings of a memory, useful for explaining the operation of the recording apparatus shown in Figure 7;

Figures 9A and 9B are plan and side views, respectively, of the tape guide drum used in the recording apparatus shown in Figure 1 or 7 when a rotary magnetic head for monitor playback is provided;

Figure 10 is a block diagram showing an example of a detecting and adjusting apparatus that can be used in the recording apparatus shown in Figure 1 or 7;

Figure 11 is a connection diagram showing a bias driving circuit used for the monitor playback rotary magnetic head in the apparatus shown in Figures 9 and 10;

Figure 12 is a diagram showing a positional relationship between the tracks on the tape and the rotary magnetic head, useful for explaining the operation of the bias driving circuit shown in Figure 11;

Figure 13 is a block diagram showing a further recording apparatus embodying the invention for recording a video signal obtained from a high speed scanning video camera;

Figure 14 is a timing chart of write and read timings of a memory, useful for explaining the operation of the recording apparatus shown in Figure 13;

Figures 15 and 16 are respective block diagrams showing yet further recording apparatuses embodying the invention for recording a video signal obtained from a high speed scanning video camera; and

Figure 17 is a plan view illustrating a tape guide drum of the apparatus shown in Figure 16.

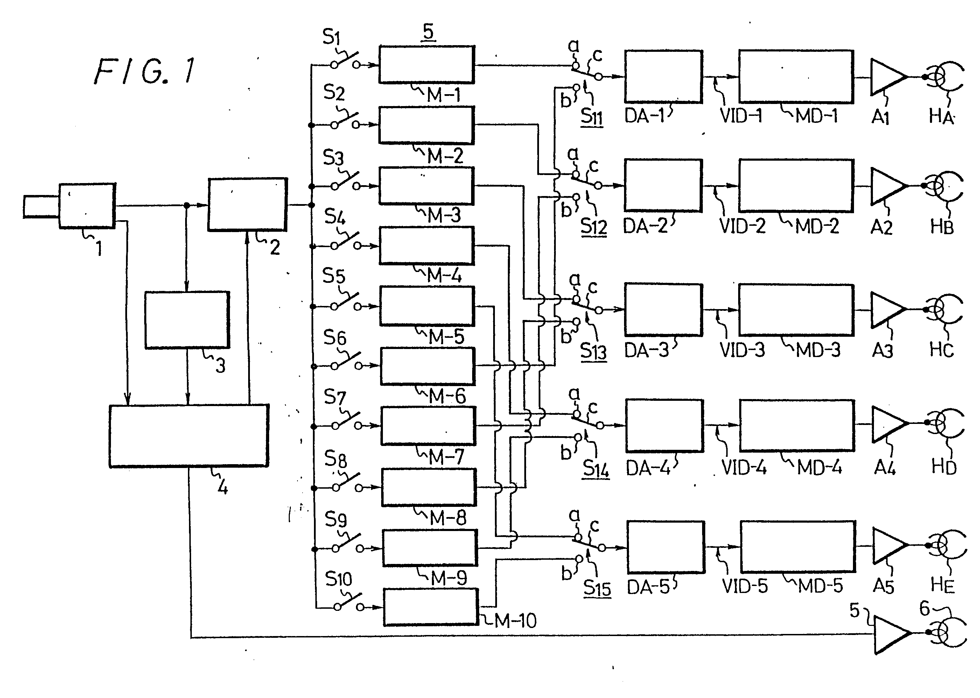

A recording apparatus embodying the invention for recording a video signal obtained from a high speed scanning video camera will now be described with reference to Figure 1. This recording apparatus employs an image pickup apparatus or high speed scanning video camera having a scanning speed which is five times the scanning speed of a standard television signal of the NTSC (National Television Systems Committee) system.

If a subcarrier frequency, a horizontal frequency, a vertical frequency and a frame frequency of a video signal are respectively taken as $f'_{sc}$, $f'_{H}$, $f'_{V}$ and $f'_{FR}$, they can be expressed as follows:

$$f'_{sc} = \frac{910}{4} f'_{H} = 17.9 \ (MHz)$$

$$f'_{H} = \frac{525}{2} f'_{V} = 78.75 \ (kHz)$$

$$f'_{V} = 300 \ (Hz)$$

$$f'_{FR} = \frac{1}{2} f'_{V} = 150 \ (Hz)$$

In Figure 1, a reference numeral 1 designates an image pickup apparatus, video camera or imager which includes an image element such as a picture tube, a solid state image pickup element or the like and a driving means, a signal processing circuit and the like corresponding thereto. In this embodiment, the video camera 1 also includes an encoder to produce a composite colour video signal in accordance with the NTSC system. Such encoder can, however, be provided at a signal processing circuit or system at a stage subsequent to the video camera 1, for example in a subsequent digital-to-analog (D/A) converter stage which will be described hereinbelow.

The composite colour video signal from the video camera 1 is supplied to an analog-to-digital (A/D) converter 2 and thereby digitised. A synchronising signal separating circuit 3 receives the video signal from the video camera 1 to separate therefrom various synchronising signals. A colour framing signal from the video camera 1 and horizontal and vertical synchronising signals from the synchronising signal separating circuit 3 are supplied to a clock signal generating/system control circuit 4. A clock signal with a frequency $f'_{W-CK}$ of, for example, $4f'_{sc}$ (=71.6 MHz) from the circuit 4 is supplied to the A/D converter 2. A control signal from the circuit 4 is supplied through an amplifier 5 to a stationary or fixed magnetic head 6 thereby to be recorded along a side edge of a magnetic tape (not shown).

The digitised video signal from the A/D converter 2 is supplied through on-off switches $S_1$ to $S_{10}$ to a field memory 5 (memories M-1 to M-10) and thereby written therein with the data rate of the write frequency $f'_{W-CK}$. Digitised video signals read out from the field memories M-1, M-6; M-2, M-7; M-3, M-8; M-4, M-9; and M-5, M-10 with the data rate of a read frequency $f_{R-CK}$ (=1/5 $f'_{W-CK}$) are respectively supplied through change-over switches $S_{11}$ to $S_{15}$ (each switch having fixed contacts $a$, $b$ and a movable contact $c$) to digital-to-analog (D/A) converters DA-1 to DA-5 and thereby converted to analog signals VID-1 to VID-5 in response to the clock signal with the read frequency $f_{R-CK}$. The analog video signals VID-1 to VID-5 from the D/A converters DA-1 to DA-5 are supplied to frequency modulators MD-1 to MD-5 and thereby frequency modulated. The frequency modulated video signals are supplied through respective amplifiers $A_1$ to $A_5$ to five rotary magnetic heads $H_A$ to $H_E$ and thereby recorded on the magnetic tape to sequentially form adjacent slanting tracks.

Each of the frequency modulators MD-1 to MD-5 includes means for adjusting the video level, carrier frequency, deviation, differential gain, differential phase, frequency characteristic and the like, by means of which the characteristics of the respective channels can be made uniform.

The present recording apparatus embodying the invention makes use of a television camera and a video tape recorder (VTR) of helical scan system or type. While, in this embodiment, the section from the video camera 1 to the D/A converters DA-1 to DA-5 is taken or considered as the television camera side and the section from the frequency modulators MD-1 to MD-5 to the rotary magnetic heads $H_A$ to $H_E$ (and the amplifier 5 and the fixed magnetic head 6) is taken as the VTR side, the boundary between the television camera side and the VTR side is not limited to the above.

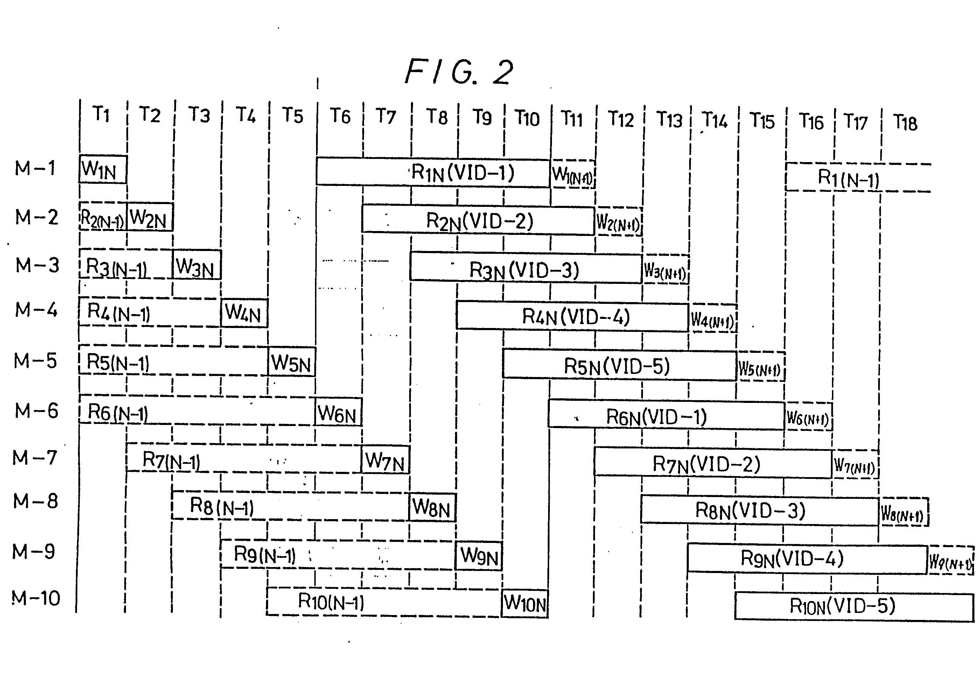

The operation of the apparatus shown in Figure 1 will now be described with reference to Figure 2. In Figure 2, references $T_1$, $T_2$, $T_3$, ..., designate field periods each having a time width or duration

$$T \left(=\frac{1}{f'_V}\right).$$

During the period $T_1$, only the switch $S_1$ is turned on to allow the digitised video signal to be written into the memory M-1. During the succeeding period $T_2$, only the switch $S_2$ is turned on to allow the video signal to be written into the memory M-2. In like manner, the image signal is sequentially written into the memories M-3 to M-10.

In the field period $T_6$, the movable contact $c$ of the switch $S_{11}$ is connected to the fixed contact $a$ so that a video signal $W_{1N}$ written into the memory M-1 during the field period $T_1$ starts to be read out therefrom. Since

$$f_{R-CK}=\frac{1}{5}f'_{W-CK},$$

5 field periods $T_6$ to $T_{10}$ are required to read the video signal $W_{1N}$ and to provide a read signal $R_{1N}$.

Similarly, in the field period $T_7$, a video signal $W_{2N}$ written into the memory M-2 during the field period $T_2$ starts to be read out. In like manner, 5 field periods $T_7$ to $T_{11}$ are required to read the video signal $W_{2N}$ and to provide a read signal $R_{2N}$. The same operation is carried out for subsequent field periods. In the field period $T_{11}$, the movable contact $c$ of the switch $S_{11}$ is connected to the fixed contact $b$ so that a video signal $W_{6N}$ stored in the memory M-6 starts to be read out therefrom and a read signal $R_{6N}$ thus is obtained. Accordingly, if the written digital video signals $W_{1N}$, $W_{2N}$, ..., are controlled to occupy one field period from the beginning of each field, the read video signals $R_{1N}$, $R_{2N}$, ..., become the same as they are read out from the beginning of each field so that the D/A converters DA-1 to DA-5 generate the analog video signals VID-1 to VID-5 which are of 5 phases with a phase interval of

$$\frac{1}{f'_V}=\frac{1}{5}\cdot\frac{1}{f_V}$$

between adjacent phases.

The video signal VID-1 comprises the video signals $R_{1N} \to R_{6N} \to R_{1(N+1)} \to$ . . ., which are read sequentially. If, now, $W_{1N}$ is taken as the video signal of the NTSC system in the first field, $W_{2N}$ is the video signal in the second field, . . ., $W_{4N}$ is the video signal in the fourth field, $W_{5N}$ is the video signal in the first field, and $W_{6N}$ is the video signal in the second field . . .. Thus, the video signal VID-1 comprises the sequential video signal $R_{1N}$ (first field) $\to R_{6N}$ (second field) $\to R_{1(N+1)}$ (third field) $\to R_{6(N+1)}$ (fourth field) $\to R_{1(N+2)}$ (first field) . . .. Therefore, the video signal VID-1 becomes a sequential video signal in accordance with the NTSC system; namely, it has excellent colour framing properties. Similarly, the video signals VID-2, . . ., VID-5 become sequential video signals in accordance with the NTSC system. Finally, the respective D/A converters produce video signals in accordance with the NTSC system with 5 phases.

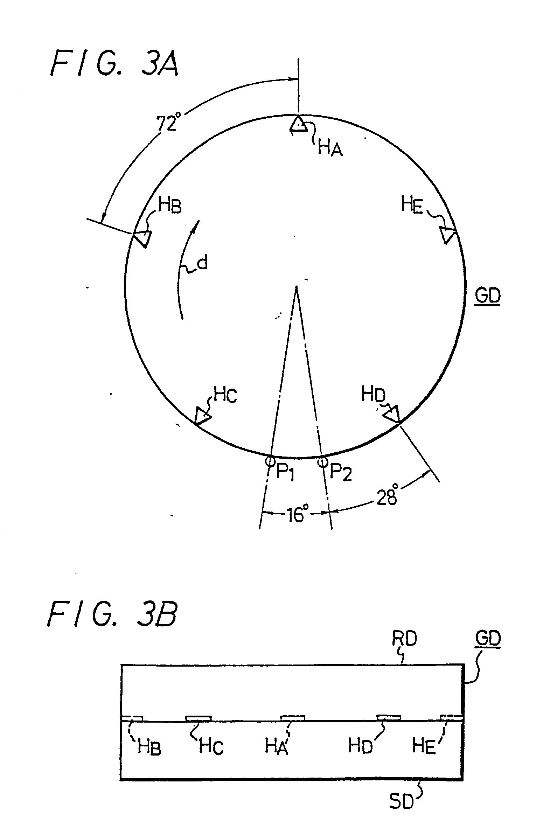

Figures 3A and 3B illustrate the arrangement of the respective rotary magnetic heads (recording heads) $H_A$ to $H_E$. As shown in Figures 3A and 3B, the five rotary magnetic heads $H_A$ to $H_E$ are mounted on a rotary drum RD of a tape guide drum GD with an angular distance of 72° between adjacent heads. The rotary drum RD is rotated once for every period of

$$\frac{1}{f_v},$$

namely, at 60 Hz, in the clockwise direction. A reference SD designates a fixed drum. A record tape (not shown) is wrapped around the tape guide drum GD along its external periphery from points $P_2$ to $P_1$ in the anticlockwise direction. The tape wrapping angle is approximately 344° and the tape transport speed is five times the standard value $V_t$ of the normal tape transport speed.

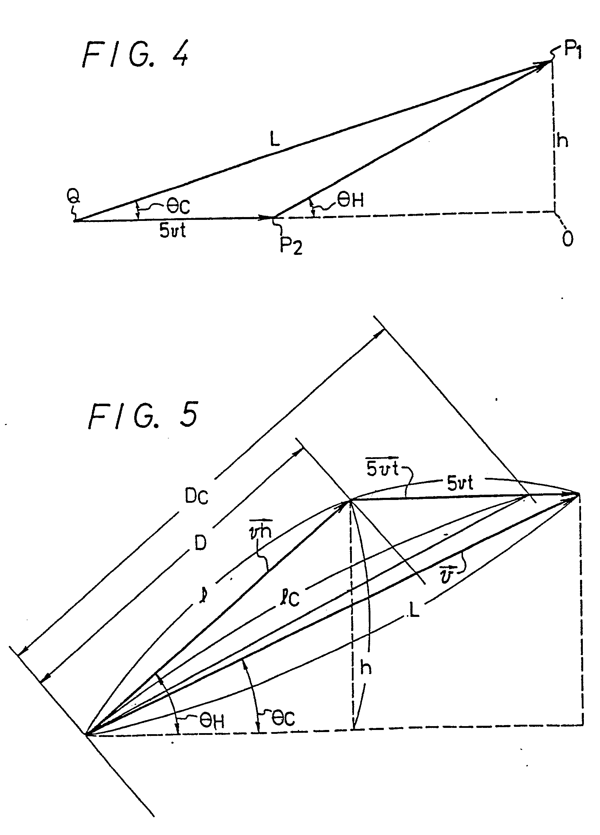

A tape recorded under the above conditions must satisfy all dimensions which are determined by the standard or normalisation. In Figure 4, a recorded track pattern vector $\overline{QP}_1$ on the tape becomes the sum of a tape transport vector $\overrightarrow{QP}_2$ and a drum rotation vector $\overrightarrow{P_2P_1}$ as expressed by the following equations:

$$\overrightarrow{QP}_1 = \overrightarrow{QP}_2 + \overrightarrow{P_2P_1}$$

$$\overline{QP}_1 \cos \theta c - \overline{P_2P_1} \cos \theta_H = 5\,vt$$

$$\overline{QP}_1 \sin \theta c = \overline{P_2P_1} \sin \theta H = h$$

where $\theta c$ and $\theta_h$ represent the track angle and the helix angle, respectively.

From the above two equations, $\overline{P_2P_1}$ and $\theta_H$ can be determined. By way of example, h, vt and $\overline{QP}_1$ are given as h=18.4 mm, vt=4.07 mm and $\overline{QP}_1$=410.764 mm. Thus:

$$\overline{P_2P_1} = \sqrt{h^2 + (\overline{QP}_1 \cos \theta c - 5vt)^2}$$

$$= \sqrt{25vt^2 - 10vt\,\overline{QP}_1 \cdot \cos \theta c + \overline{QP}_1{}^2}$$

$$\doteqdot \overline{QP}_1 \sqrt{1 - 10 \frac{vt}{QP_1} \cos \theta c}$$

$$\theta_H = \sin^{-1} \frac{h}{\overline{P_2P_1}}$$

$\overline{P_2P_1}$ and $\theta$ are respectively 390.4357 and 2.70117° (=2°42′04″). Thus, $\theta_H$ is selected to be the inclination angle between the tape and the drum in such a manner that $\overline{P_2P_1}$ may equal

$$\frac{344°}{360°}$$

of the external periphery of the tape guide drum GD.

When reproducing the tape by a VTR of SMPTE (Society of Motion Picture and Television Engineers) type C, in order to form on the tape a slanting track in which the relative speeds of the rotary head and the tape transport speed are coincident with each other the external diameter of the tape guide drum must be selected to be smaller than that of the SMPTE type C VTR by a predetermined amount. How this can be accomplished will now be described with reference to Figure 5.

In Figure 5, a relative speed or velocity $\overrightarrow{V}$ between the rotary magnetic head and the tape becomes the sum of a tape transport speed $5\,\overrightarrow{vt}$ (vt is the standard tape running speed or velocity of the tape of the SMPTE type C VTR during normal running) and a linear velocity or speed $\overrightarrow{vh}$ of the rotary magnetic head as expressed by the following equation.

6

# 0 120 696

$$\vec{v} = \vec{vh} + 5\vec{vt}$$

If the length (track length) of a slanting track formed on the magnetic tape by the rotary magnetic head upon still playback of the SMPTE type C VTR is taken as lc, the track length lc is expressed by the following equation

$$lc = \pi\ Dc\ .\ (\phi c/360)$$

where Dc is the external diameter of the tape guide drum of the SMPTE type C VTR and $\phi$ is the tape wrapping angle thereof $(=340°)$.

A track length l of a slanting track formed on the tape when the tape transport speed is five times the normal tape speed is expressed as

$$l = \pi\ D\ .\ (\phi c/360)$$

where D is the external diameter of the tape guide drum of the VTR used in the present apparatus.

Accordingly, $lc^2$ and $l^2$ can be expressed by the following equations:

$$lc^2 = h^2 + (L\ \cos\ \theta c - vt)^2$$

$$l^2 = h^2 + (L\ \cos\ \theta c - 5vt)^2$$

where h is the length of the track on the tape in its width direction and L is the track length on the tape of the SMPTE type C VTR when the tape is transported at a speed which is five times the normal tape speed.

Consequently, Dc/D can be expressed as follows:

$$Dc/D = \{h^2 + (L\ \cos\ \theta c - vt)^2\}^{1/2} \times \{h^2\ (L\ \cos\ \theta c - 3vt)\}^{-1/2}$$

Thus, the outer diameter $D(<Dc)$ of the tape guide drum is selected.

The tape pattern of the tape recorded by the tape guide drum, the rotary magnetic head, the tape transport system and so on, which are determined as above, can satisfy the standards of the SMPTE type C VTR.

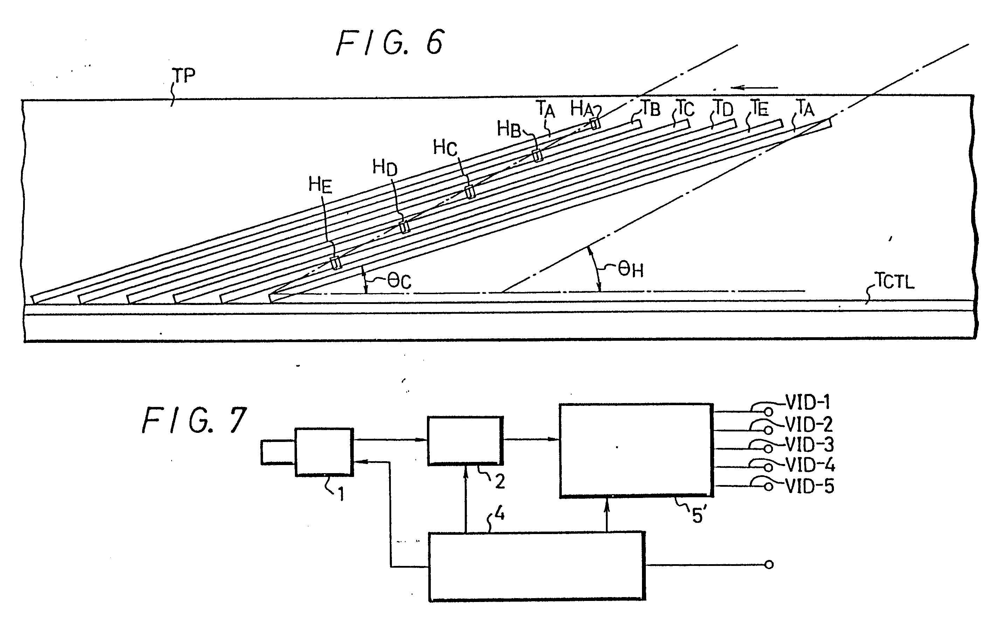

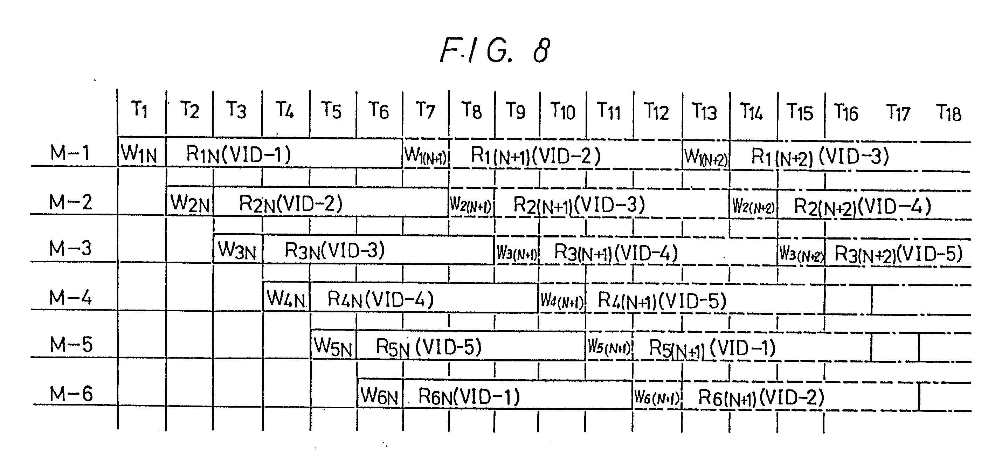

Figure 6 shows the tape pattern suited for the standard of the SMPTE type C VTR and the positional relationship between the rotary magnetic heads $H_A$ to $H_E$ and the corresponding slanting tracks. In Figure 6, a reference TP designates the magnetic tape and references $T_A$ to $T_E$ designate slanting tracks corresponding to the rotary magnetic heads $H_A$ to $H_E$. A reference $T_{CTL}$ designates a control signal track.

When the tape recorded as described above is reproduced by a VTR complying with the standard of the SMPTE type C format in a normal playback mode, it is possible to reproduce the video picture moving at high speed in slow motion.

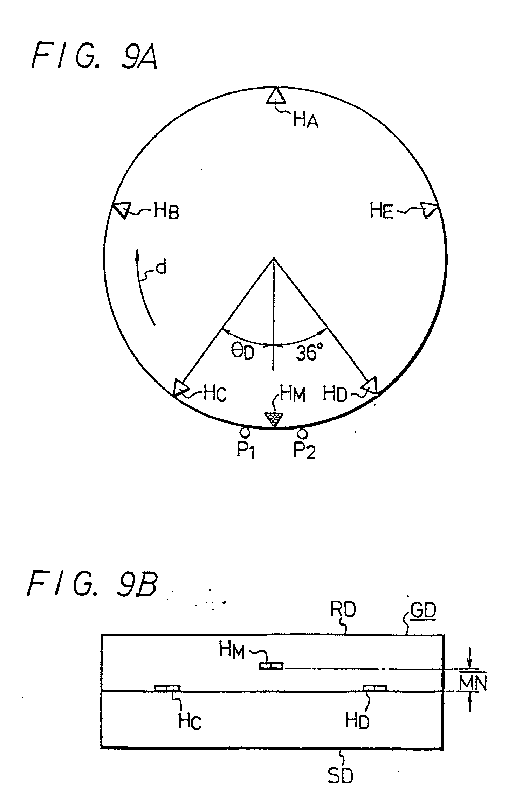

Another recording apparatus embodying the invention for recording a video signal obtained from a high speed scanning video camera will now be described with reference to Figure 7. If the switches $S_1$ to $S_{10}$, the memory 5, the switches $S_{11}$ to $S_{15}$ and the D/A converters DA-1 to DA-5 of Figure 1 are taken in Figure 7 as one memory 5', this memory 5' will be modified as follows. By way of example, if a serial memory such as a charge-coupled device (CCD) and a shift register is used, the memory 5' can be formed by six field memories, switches, D/A converters and so on. Parts of the apparatus of Figure 7 corresponding to parts in Figure 1 are designated by the same references and will not be described again.

The operation of the memory 5' will be described with reference to Figure 8. In this case, let it be assumed that the memory 5' include six field memories M-1 to M-6. During the field period $T_1$, the digitised video signal is written into and then stored in the memory M-1. During the succeeding field period $T_2$, the video signal is written into the memory M-2. Similarly, the video signal is sequentially written into the memories M-3 to M-6 thereafter. In the field period $T_2$, the video signal $W_{1N}$ written into the memory M-1 during the field period $T_1$ starts to be read out therefrom. Since

$$f_{R-CK} = \frac{1}{5} f'_{W-CK},$$

five field periods $T_2$ to $T_6$ are required to read the video signal $W_{1N}$ and to provide the read signal $R_{1N}$.

Similarly, in the field period $T_3$, the video signal $W_{2N}$ stored in the memory M-2 during the field period $T_2$ starts to be read out therefrom. In like manner, five field periods $T_3$ to $T_7$ are required to read the video signal $W_{2N}$ and to provide the read signal $R_{2N}$. The same operation is carried out in subsequent field periods. In the field period $T_7$, the movable contact c of the switch $S_{11}$ is connected to the fixed contact b so that the video signal $W_{6N}$ stored in the memory M-6 starts to be read out therefrom to produce the read signal $R_{6N}$. Accordingly, when the written digital video signals $W_{1N}$, $W_{2N}$, . . ., are controlled by occupy one field period from the beginning of each field, the read out video signals $R_{1N}$, $R_{2N}$, . . ., come to be read out

7

from the beginning of each field so that the D/A converters DA-1 to DA-5 produce the analog video signals VID-1 to VID-5 of 5 phases with a phase interval of

$$\frac{1}{f'_V} = \frac{1}{5} \cdot \frac{1}{f_V}$$

between adjacent phases.

The video signal VID-1 comprises the video signals $R_{1N} \rightarrow R_{6N} \rightarrow R_{1(N+1)}, \ldots$, which are read sequentially. If, now, $W_{1N}$ is taken as the video signal of the NTSC system in the first field, $W_{2N}$ is the video signal of the second field, ..., $W_{4N}$ is the video signal of the fourth field, $W_{5N}$ is the video signal of the first field and $W_{6N}$ becomes the video signal of the second field, .... Consequently, the video signal VID-1 comprises sequential video signals $R_{1N}$(first field)$\rightarrow R_{6N}$(second field)$\rightarrow R_{1(N+1)}$(third field)$\rightarrow R_{6(N+1)}$(fourth field)$\rightarrow R_{1(N+2)}$(first field) .... In other words, the video signal VID-1 apparently becomes a sequential video signal in accordance with the NTSC system with excellent colour framing properties. Similarly, the video signals VID-2, ..., VID-5 becomes sequential video signals in accordance with the NTSC system. As a result, the D/A converters DA-1 to DA-5 produce video signals in accordance with the NTSC system with 5 phases.

If the memory 5' in Figure 7 uses a random access memory (RAM), the writing and the reading can be carried out in a time sharing manner so that 5 field memories are sufficient.

While in the embodiment of Figure 1 the synchronising signal is separated from the composite video signal derived from the video camera 1 and then is supplied to the clock signal generating/system control circuit 4, it is also possible, as shown in Figure 7, for the synchronising signal to be generated from the clock signal generating/system control circuit 4, which then is fed to the video camera 1.

In order that a tape recorded by the above recording apparatus can be reproduced by a VTR of the SMPTE type C format, the slanting tracks formed on the magnetic tape by the five rotary magnetic heads $H_A$ to $H_E$ should each have the same characteristic since the channel of the rotary magnetic head and the reproducing circuit of the VTR are made for one channel.

To this end, there is required an apparatus which reproduces the slanting tracks recorded on the magnetic tape by the respective rotary magnetic heads $H_A$ to $H_E$, checks the same and adjusts and makes uniform the characteristics of the recording systems relative to the rotary magnetic heads $H_A$ to $H_E$ on the basis of the checked results.

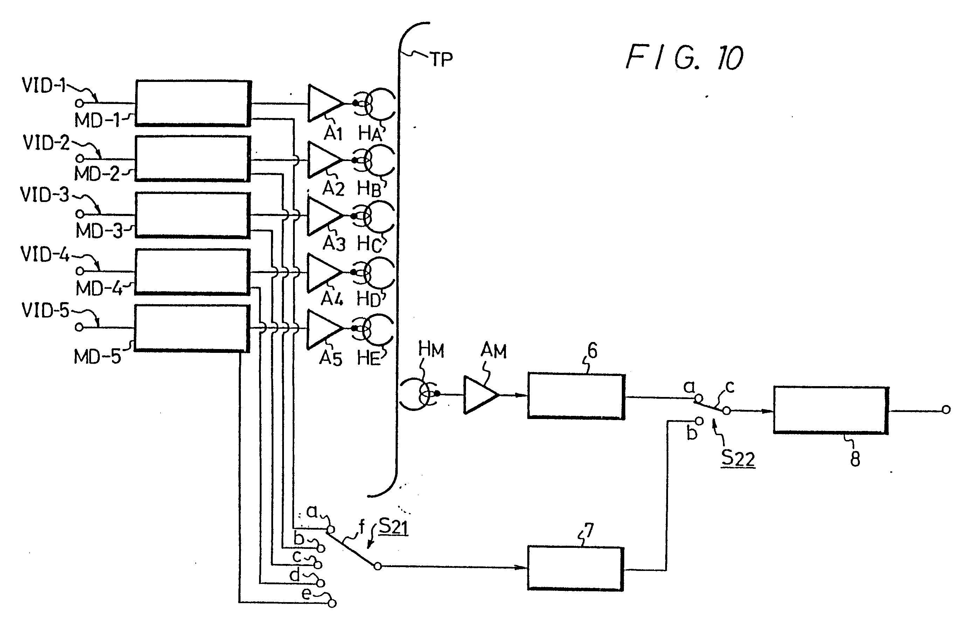

Such a detecting/adjusting apparatus will now be described with reference to Figures 9A, 9B and 10. As shown in Figures 9A and 9B, in addition to the rotary magnetic heads $H_A$ to $H_E$ shown in Figure 3, a rotary magnetic head $H_M$ for monitor playback use is mounted on the rotary drum RD of the tape guide drum GD. In the apparatus of Figure 9, the rotary magnetic head $H_M$ is positioned, for example, substantially centrally between the rotary magnetic heads $H_C$ and $H_D$. An angle $\theta_D$ between the heads $H_C$ and $H_M$ is about 36°, and a reference $\overline{MN}$ designates a stepped length of the head $H_M$ relative to the heads $H_A$ to $H_E$.

As shown in Figure 10, an output terminal of the rotary magnetic head $H_M$ for monitor playback use is connected through an amplifier $A_M$ to an input terminal of a playback equaliser 6, and an output terminal of the playback equaliser 6 is connected to a fixed contact $a$ of a changeover switch $S_{22}$. The output terminals of the frequency modulators MD-1 to MD-5 for the rotary magnetic heads $H_A$ to $H_E$ are connected to fixed contacts $a$ to $e$, respectively, of a change-over switch $S_{21}$, and a movable contact $f$ of the change-over switch $S_{21}$ is connected to an input terminal of a mixing circuit 7 which mixes a white reference signal. An output terminal of the mixing circuit 7 is connected to a fixed contact $b$ of the change-over switch $S_{22}$ and a movable contact $c$ of the switch $S_{22}$ is connected to an input terminal of an FM demodulator 8.

The operation of the detecting/adjusting apparatus will now be described. At first, the movable contact $c$ of the change-over switch $S_{22}$ is connected to the fixed contact $a$, a standard tape recorded by a VTR of SMPTE C type format is transported at a speed five times the normal speed, the tape is reproduced by the rotary magnetic head $H_M$, and the playback system then is adjusted so as to make its characteristic meet with the standard or normalisation. Thereafter, a test signal (for example, a white signal) is supplied to each of the FM modulators MD-1 to MD-5. Then, the movable contact $c$ of the change-over switch $S_{22}$ is connected to its fixed contact $b$. In the mixing circuit 7, a reference signal having a frequency the same as that of the white signal is inserted into the vertical synchronising signal intervals of the modulated test signals from the FM modulators MD-1 to MD-5. By operating the change-over switch $S_{21}$, the level of the demodulated signal of each channel from the FM demodulator 8 is compared with the level of the reference signal and the gain of the recording system of each channel is adjusted to make the above levels equal to one another.

Thereafter, the movable contact $c$ of the change-over switch $S_{22}$ is connected to its fixed contact $a$. A test pattern signal is supplied to the respective FM modulators MD-1 to MD-5 and the modulated test pattern signals therefrom are sequentially recorded on the magnetic tape TP by the rotary magnetic heads $H_A$ to $H_E$ so as to form the slanting tracks. At that time, the rotary magnetic head $H_M$ for monitor playback use (the head $H_M$ can be displaced in a direction substantially perpendicular to the tracing direction) is displaced to trace and reproduce the slanting tracks formed by the magnetic heads $H_A$ to $H_E$. In consequence, various characteristics of the recording system of each channel are adjusted so as to make the video level, clamp level, preemphasis frequency characteristic, differential gain, differential phase,

8

waveform characteristic and so on of the test pattern signal, which comprises each demodulated output from the FM-modulator 8, equal to those of the test pattern signal formed by reproducing the standard tape. Thus, the characteristics of the recording systems of the rotary magnetic heads $H_A$ to $H_E$ can be made uniform.

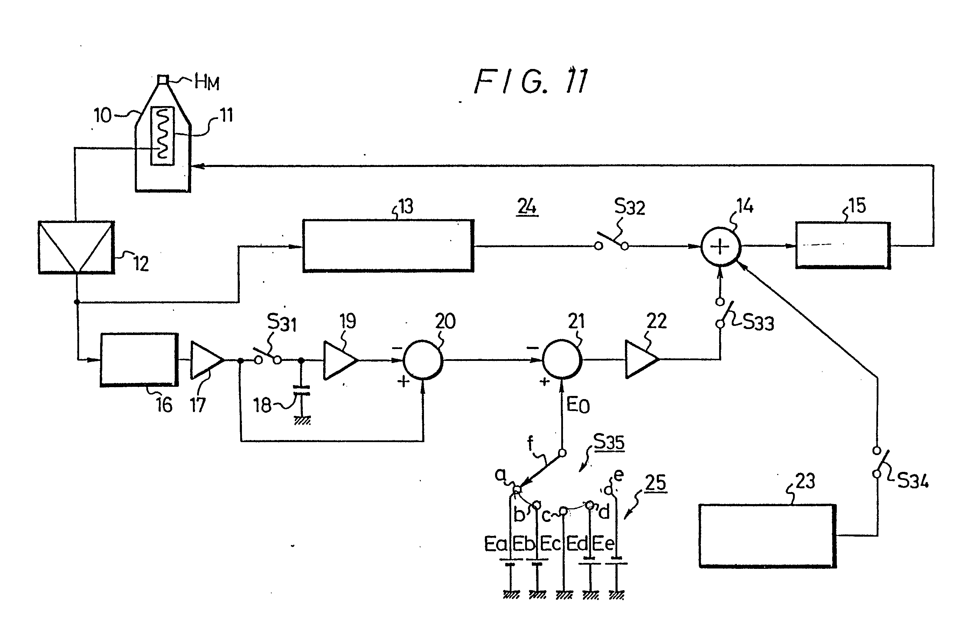

A bias drive circuit for displacing the monitor playback rotary magnetic head $H_M$ will now be described with reference to Figure 11. The rotary magnetic head $H_M$ for monitor playback use is mounted through a bimorph plate 10 acting as an electro-mechanical transducer element to the rotary drum RD of the tape guide drum GD shown in Figure 9. On this bimorph plate 10 is attached a strain gauge 11 acting as a mechanical-electric transducer element to detect displacement of the bimorph plate 10 or the rotary magnetic head $H_M$.

In a dynamic tracking servo circuit 24, the detected displacement output from the strain gauge 11 is supplied through an amplifier 12 to a known dynamic tracking control circuit 13 which is used in the VTR of SMPTE type C format or the like. A control signal from the control circuit 13 is supplied through an on-off switch $S_{32}$, a composer (adder) 14 and a dynamic tracking drive circuit 15 to the bimorph plate 10 as a displacement drive signal.

Further the detected displacement signal from the amplifier 12 is supplied through a low-pass filter 16, an amplifier 17 and an on-off switch $S_{31}$ to a hold capacitor 18. The voltage across the capacitor 18 is supplied through an amplifier 19 to a composer (subtractor) 20 and thereby subtracted from the output of the amplifier 17. The output from the composer 20 is supplied to other composer (subtractor) 21 and thereby subtracted from a $dc$ voltage $E_0$ derived from a movable contact $f$ of a change-over switch $S_{35}$ in a $dc$ voltage generating means 25. The output from the composer 21 is supplied through an amplifier 22 and an on-off switch $S_{33}$ to the composer 14 and thereby added to the output from the dynamic tracking control circuit 13. To fixed contacts $a$ to $e$ of the change-over switch $S_{35}$ are applied $dc$ voltages Ea ($>0$), Eb ($>0$), Ed ($=0$), Ed ($<0$) and Ee ($<0$), respectively.

An erase signal generating circuit 23 generates an attenuating vibrating or oscillatory erase signal which converges or decays to 0V. The erase signal from the circuit 23 is supplied through an on-off switch $S_{34}$ to the composer 14.

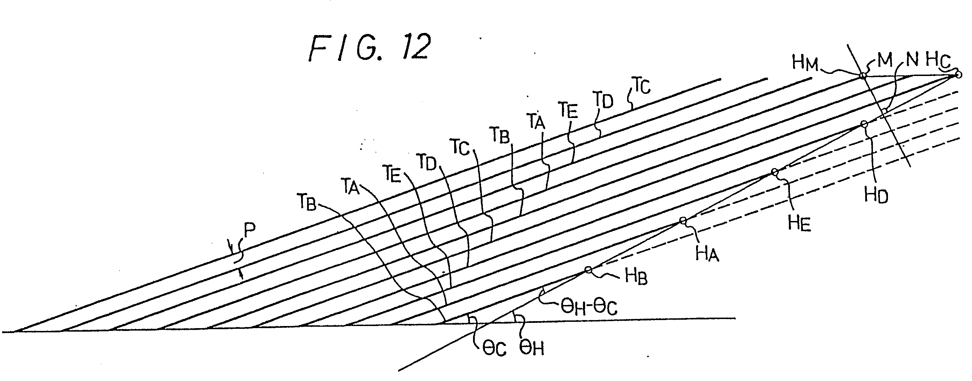

The operation of the circuit shown in Figure 11 will now be described with reference to Figure 12. Figure 12 shows the tracks on the tape and the magnetic heads at some instant in the recording mode, more specifically an instant when the rotary head $H_C$, for example, has just finished tracing one track. In Figure 12, references $T_A$ to $T_E$ designate tracks traced by the heads $H_A$ to $H_E$, respectively, and M designates a neutral position of the movable playback head $H_M$ when the bimorph plate 10 is in the non-bias state. A straight line $\overline{MN}$ designates a line along which the movable head $H_M$ is moved. The position M of the movable playback head $H_M$ is on the track $T_A$ traced by the head $H_A$. When the movable head $H_A$ is moved by 2 track pitches along the line $\overline{MN}$ in a positive direction, the position M is on the track $T_D$. When the movable head $H_A$ is moved by one track pitch in the positive direction, the position M is on the track $T_E$. When the movable head $H_A$ is moved by one track pitch in the negative direction, the position M is on the track $T_B$. When the movable head $H_A$ is moved by 2 track pitches in the negative direction, the position M is on the track $T_C$. Thus, the respective tracks can be reproduced. In practice, the position of the movable head $H_M$ is determined in such a manner that the position N may be disposed between the tracks $T_D$ and $T_C$ on the track on which the position M is disposed. In this case, if the position N is disposed at the middle point between the tracks $T_D$ and $T_C$, the line $\overline{MN}$ becomes 2.5 track pitches. In general, the line $\overline{MN}$ is given by

$$\overline{MN} \doteqdot 2p + \overline{CN} \tan (\theta_H - \theta_C)$$

where p is the track pitch, C is the position of the head $H_C$, $\theta_H$ is the helix angle and $\theta_C$ is the track angle. In the above equation, if p=0.18 mm and $\overline{CN} \tan (\theta_H - \theta_C) = 0.5p$, $\overline{MN}$ becomes 0.45 mm.

In Figure 11, when the recording mode is selected the switch $S_{32}$ is turned off once to open the dynamic tracking loop and thereafter the switch $S_{34}$ is turned on to apply the erase signal to the bimorph plate 10 of the head $H_M$ whereby the bimorph plate 10 is returned to the neutral position. At that time, the head $H_M$ should trace the track $T_A$. In this state, the dynamic tracking loop is closed once. At this time, the head $H_M$ traces the track $T_A$ in a just tracking state. At that time, when the switch $S_{33}$ is turned off and the switch $S_{31}$ is turned, on the output from the low-pass filter 16 is held in the capacitor 18. After the switch $S_{31}$ is turned off and the switch $S_{33}$ is turned on, when the movable contact $f$ of the switch $S_{35}$ is connected to the fixed contact $a$, the voltage Ea corresponding to 2 track pitches of the output from the strain gauge 11 is amplified by the amplifier 22 and then supplied to the circuit 15 so that the output from the strain gauge 11 is substantially made coincident with the voltage Ea. Thus, the head $H_M$ is moved by 2 track pitches to trace the corresponding track.

When the movable contact $f$ of the switch $S_{35}$ is sequentially thereafter connected to the fixed contacts $b$, ..., $e$, the head $H_M$ traces the respective tracks $T_A$ to $T_E$.

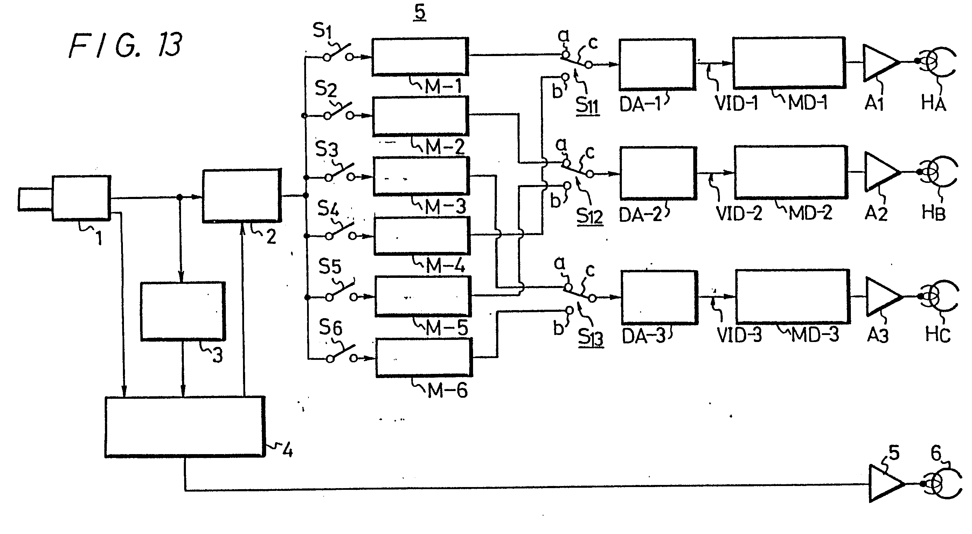

Another recording apparatus embodying the invention for recording a video signal obtained from a high speed scanning camera will now be described with reference to Figure 13. In Figure 13, parts corresponding to parts shown in Figure 1 are designated by the same references and will not be described again. The embodiment of Figure 13 uses a video camera having a scanning speed which is three times the scanning speed of the standard television signal of the NTSC system.

If the subcarrier frequency, horizontal frequency, vertical frequency and frame frequency of the video signal are respectively taken as $f''_{SC}$, $f''_{H}$, $f''_{V}$ and $f''_{FR}$, they can be expressed as follows:

$$f''_{SC} = \frac{910}{4} \cdot f'_{H} = 10.7 \text{ (MHz)}$$

$$f''_{H} = \frac{525}{2} \cdot f'_{V} = 47.25 \text{ (kHz)}$$

$$f''_{V} = 180 \text{ (Hz)}$$

$$f''_{FR} = \frac{1}{2} f'_{V} = 90 \text{ (Hz)}$$

The digitised video signal from the A/D converter 2 is supplied through the on-off switches $S_1$ to $S_6$ to the field memory 5 (including memories M-1 to M-6) and written therein with the data rate of the write frequency $f'_{W-CK}$. The digitised video signals read out from the field memories M-1, M-4; M-2, M-5; and M-3, M-6 with the data rate of the read frequency

$$f_{R-CK} (= \frac{1}{3} f'_{W-CK})$$

are supplied through respective change-over switches $S_{11}$ to $S_{13}$ (each of which includes the fixed contacts $a$, $b$ and the movable contact $c$) to the D/A converters DA-1 to DA-3 and thereby converted to analog signals in response to the clock signal with the read frequency $f_{R-CK}$. The analog video signals VID-1 to VID-3 from the D/A converters DA-1 to DA-3 are supplied to frequency modulators MD-1 to MD-3, respectively, and thereby frequency modulated. The frequency modulated video signals VID-1 to VID-3 are supplied through respective amplifiers $A_1$ to $A_3$ to three rotary magnetic heads $H_A$ to $H_C$, which are located with an angular distance of 120° between adjacent ones, and thereby recorded on the magnetic tape so as sequentially to form adjoining slanting tracks.

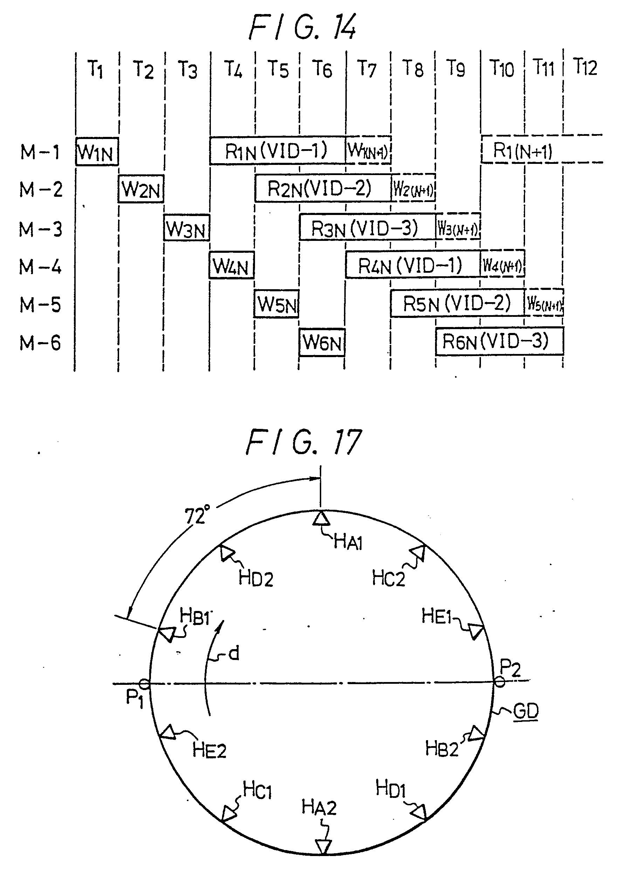

The operation of the apparatus shown in Figure 13 will now be described with reference to Figure 14. In Figure 14, references $T_1$, $T_2$, $T_3$, ... designate field periods, each of which has a time width or duration

$$T (= \frac{1}{f''_{V}}).$$

During the period $T_1$, only the switch $S_1$ is turned on so that the digitised video signal is written into the memory M-1. During the next period $T_2$, only the switch $S_2$ is turned on to allow the digitised video signal to be written into the memory M-2. In like manner, the digitised video signals are thereafter sequentially written into the memories M-3 to M-6.

In the field period $T_4$, the movable contact $c$ of the switch $S_{11}$ is connected to its fixed contact $a$ so that the video signal $W_{1N}$ stored in the memory M-1 during the field period $T_1$ starts to be read out therefrom. Since

$$f_{R-CK} = \frac{1}{3} f'_{W-CK},$$

3 field periods $T_4$ to $T_6$ are required to read the video signal $W_{1N}$ and to provide the read signal $R_{1N}$.

Similarly, in the field period $T_5$, the video signal $W_{2N}$ stored in the memory M-2 during the field period $T_2$ starts to be read out therefrom. Again, three field periods $T_5$ to $T_7$ are required to read the video signal $W_{2N}$ and to provide the read signal $R_{2N}$. The same operation will be carried out for subsequent field periods. In the field period $T_{11}$, the movable contact $c$ of the switch $S_{11}$ is connected to its fixed contact $b$ so that the video signal $W_{4N}$ stored in the memory M-4 is read out therefrom, thereby to obtain the read signal $R_{4N}$. Thus, when the written digital video signals $W_{1N}$, $W_{2N}$, ... are controlled to occupy an amount of one field starting from the beginning of each field, the read video signals $R_{1N}$, $R_{2N}$, ... become such as to be read out from the beginning of each field. Accordingly, the D/A converters DA-1 to DA-3 produce 3-phase analog video signals VID-1 to VID-3 with a phase distance of

10

$$\frac{1}{f''_v} = \frac{1}{3} \cdot \frac{1}{f_v}$$

between adjacent phases.

The video signal VID-1 comprises the video signals $R_{1N}{\to}R_{4N}{\to}R_{1(N+1)}{\to}$. . . which are sequentially read out. If, now, $W_{1N}$ is taken as the video signal of the NTSC system in the first field, $W_{2N}$ becomes the video signal of the second field . . ., $W_{4N}$ the video signal of the fourth field, $W_{5N}$ the video signal of the first field, and $W_{6N}$ the video signal of the second field, . . . . Accordingly, the video signal VID-1 comprises the video signal $R_{1N}$(first field)${\to}R_{4N}$(fourth field)${\to}R_{1(N+1)}$(third field)${\to}R_{4(N+1)}$(second field)${\to}R_{1(N+2)}$(first field), . . .. The colour framing thereof is thus defective. Therefore, if the video signals are encoded after being converted from digital to analog signals, it is necessary for the video signal $R_{4N}$ (fourth field), $R_{4(N+1)}$(second field), . . . to invert the phase of the carrier chrominance signal thereof. The video signals VID-2 to VID-3 must undergo the same processing. Accordingly, in this case, if the colour encoder which produces the composite colour video signal according to the NTSC system in the camera or imager 1 is provided with means for inverting the phase of the carrier chrominance signal, signals having no apparent colour framing property can be produced as the video signals VID-1 to VID-3.

Consequently, according to the above-described recording apparatus, a colour video signal which requires a tracing speed which is N times the normal value of the NTSC system is produced from the video camera in the form of a component signal and then written into the memory, the storage capacity of which is N fields or more. The N-channel component video signals having the normal tracing speed are produced from the memory and then encoded to form signals in accordance with the NTSC system, thereby to produce NTSC colour video signals. The NTSC colour video signals are then supplied to N rotary magnetic heads and the N-channel colour video signals are recorded on the magnetic tape so as sequentially to form adjoining slanting tracks. In this recording apparatus for recording a video signal obtained from a high speed scanning video camera, if N is 4n+1 or 4n−1 (where n=1, 2, 3, . . .), the arrangement of the colour encoder becomes different. When N=4n+1, the colour encoder may be an ordinary NTSC system encoder. On the other hand, when N=4n−1, in order to record on the tape a colour video signal with colour framing properties the NTSC system colour encoder must be modified so as to invert the phase of the colour subcarrier signal of each channel at every field.

If a recording apparatus embodying the present invention is used to process a colour video signal in accordance with the SECAM system, the colour encoder must carry out the same colour framing operation as that of the colour video signal of the NTSC system.

For a colour video signal of the PAL (phase alteration line) system, when N=8n+1 (n is an even number in N=4n+1) (n=1, 2, 3, . . .), the colour encoder may be any ordinary PAL system encoder. When N=8n−3 (n is an odd number in N=4n+1) (n=1, 2, 3, . . .), the colour encoder must be modified so as to produce a colour video signal with the colour framing recorded on the tape when the colour video signal is encoded after being converted from digital to analog signals for the PAL system.

Accordingly, when N is an odd number equal to 3 or more, the arrangement of the colour encoder is simple. If this simple arrangement of the colour encoder is not needed or desired, N may be an even number.

According to the above-described recording apparatus for recording a video signal obtained from a high speed scanning video camera, a phenomenon moving at high speed can easily be picked up and recorded by means of a television camera and a VTR. A tape recorded by such recording apparatus can be reproduced by a VTR of a normal system or type, that is to say it is possible to obtain a recorded tape which has compatibility.

When N=4n±1 (n=1, 2, 3, . . .), the arrangement of the colour encoder is simple for each television system.

The above-described embodiments describe recording apparatus which records a video signal derived from a television or video camera having a line scanning speed which is three or five times greater than the standard television signal so as to be reproducible by a VTR of SMPTE C type format, or to produce a tape having compatibility. Various variations and modifications as regards the application of the above technical idea can be considered. More particularly, it is possible to record a video signal derived from a television camera having a line scanning speed of, for example, five times, 5×2=10 times and 5×3=15 times that of a standard television signal. To this end, the television camera must be controlled to make the line scanning speed equal to 5×M times (M=1, 2, 3, . . .) that of the standard television signal. If the speed of revolution of the rotary drum is increased to be M times the normal speed of revolution with the tape speed five times the normal speed, it is possible to record video signals of various line scanning speeds. In this case, if the speed of revolution of the rotary drum is made equal to M times the normal speed of revolution, there is some risk of the occurrence of the above-mentioned defects, namely difficulty in obtaining a corresponding relationship between emphasis and deemphasis, difficulty in securing the characteristics of the recording and reproducing circuit, problems of rotary transformer characteristic and the air film, or the like. However, the present inventor has ascertained that if the speed of revolution of the rotary drum is made equal to three times the normal speed of revolution, the above-mentioned defects do not become significant.

**0 120 696**

However, if the speed of revolution of the rotary drum is made equal to four or more times the normal speed of revolution, the above-mentioned defects cannot be neglected and cannot be compensated for.

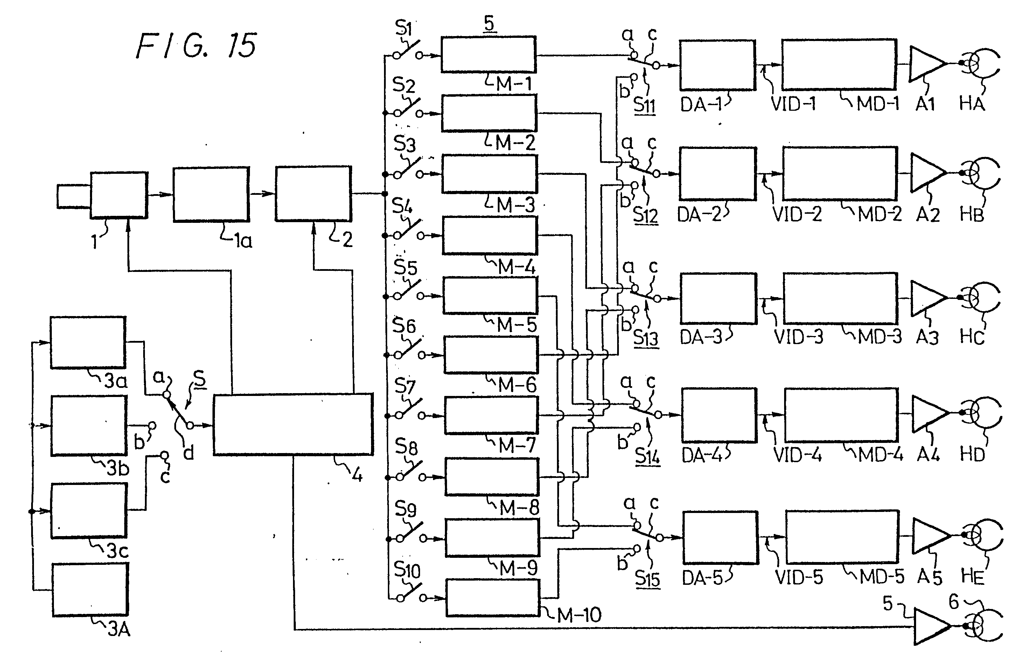

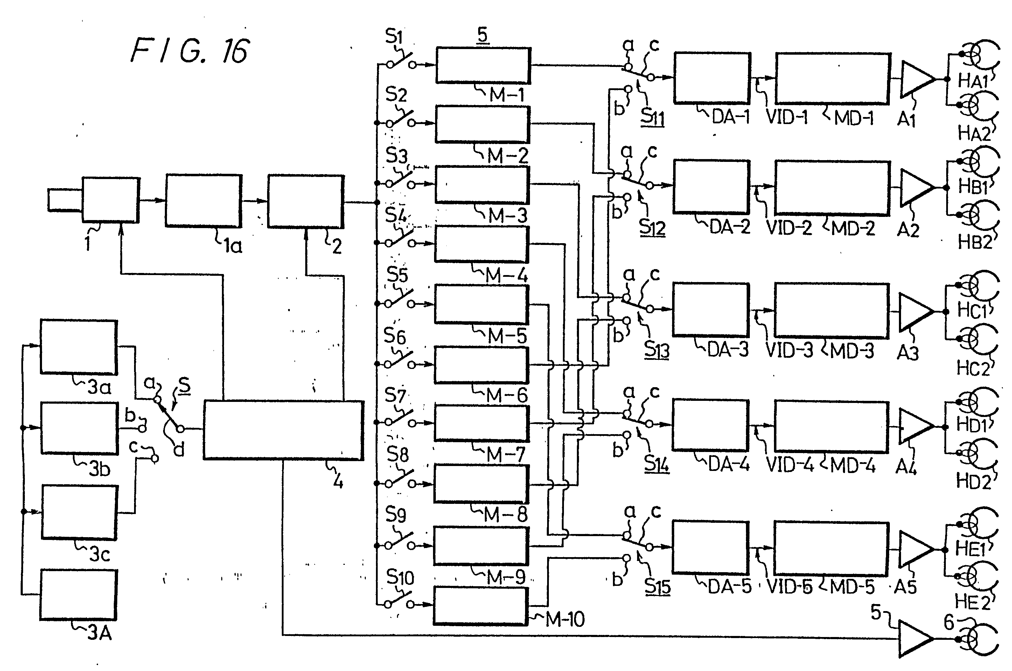

Further recording apparatuses embodying this invention for recording a video signal obtained from a high speed scanning video camera, in which the speed of revolution of the rotary drum can be selectively switched, will now be described with reference to Figures 15 and 16. In Figures 15 and 16, except for an arrangement for selecting a line scanning speed of a television camera, parts corresponding to parts shown in Figure 1 are designated by the same references and will not be described again.

According to the embodiment shown in Figure 15, the recording apparatus comprises memory means for storing a video signal derived from a video camera, the scanning speed M.N.Sn of which is M.N (where M and N are natural numbers) times the scanning speed Sn of a standard television signal, and N rotary magnetic heads supplied with video signals of N channels read out in parallel from the memory means to have a scanning speed M.Sn which is M times the scanning speed Sn of the standard television signal and rotating at a speed of revolution equal to M times the normal speed of revolution, wherein the value of M in the scanning speed M.N.Sn of the video camera is changeable in multiple stages, the speed of revolution of the rotary magnetic heads being changed in multiple stages in accordance with the change of the value of M, and the video signals of N-channels being recorded on the magnetic tape by the N rotary magnetic heads so as sequentially to form adjoining slanting tracks.

According to the embodiment shown in Figure 16, the recording apparatus comprises memory means for storing a video signal derived from a video camera, the scanning speed M.N.Sn of which is M.N (where M and N are natural numbers) times the scanning speed Sn of a standard television signal, and 2N rotary magnetic heads supplied with video signals of N-channels read out in parallel from the memory means to have a scanning speed M.Sn which is M times the scanning speed Sn of the standard television signal and rotating at a speed of revolution equal to M/2 times the field number of the standard television system, wherein the scanning speed M.N.Sn of the video camera is changeable in multiple stages by changing the value of M, the speed of revolution of the rotary magnetic heads being changed in multiple stages in accordance with the change of the value of M, and the video signals of N-channels being recorded on the magnetic tape by the 2N rotary magnetic heads so as sequentially to form adjoining slanting tracks.

According to the embodiments shown in Figures 15 and 16, phenomena moving at high speed can easily be picked up and recorded by using the television camera and the VTR. Also, the line scanning speed of the television camera can be changed in accordance with the moving phenomenon.

The recording apparatuses shown in Figures 15 and 16 will now be described in detail.

In Figure 15, a reference numeral 1 designates an imager or video camera which includes an image element such as a pickup tube, a solid state image element or the like, a driving means therefor, a signal processing circuit and so on. In this case, the video camera 1 also includes an encoder which produces a composite colour video signal according to the NTSC system. However, it is possible to provide such encoder in the signal processing circuit or system (for example, in a subsequent D/A converter which will be described later) at a stage subsequent to the video camera 1.

The composite colour video signal from the video camera 1 is supplied through a gain change-over circuit 1a to an A/D converter 2 and thereby digitised. A reference numeral 4 designates a clock signal generating/system control circuit which produces a clock signal and a control signal including various synchronising signals and colour framing and which controls the whole system. An oscillatory signal having a frequency of $6f_c$ and produced by a reference oscillator 3A is supplied to frequency dividers 3a, 3b and 3c, the frequency dividing ratios of which are 1/6, 1/3 and 1/2, respectively, and thereby frequency-divided, whereby reference clock signals of frequencies $f_c$, $2f_c$ and $3f_c$ can be selected by a switch S (having fixed contacts $a$, $b$, $c$ and a movable contact $d$) and supplied to the circuit 4. Also, the gain of the gain change-over circuit 1a is switched in response to switching of the switch S.

In the recording apparatus shown in Figure 16, the rotary magnetic heads $H_A$ to $H_E$ shown in Figures 1 and 15 are replaced by respective pairs of rotary magnetic heads $H_{A1}$, $H_{A2}$; . . .; $H_{E1}$, $H_{E2}$. In Figure 16, parts corresponding to parts shown in Figure 1 or Figure 15 are designated by the same references and will not be described again. The embodiment of Figure 16 makes use of a video camera having a scanning speed which is 5M times, or 5, 10 and 15 times, the scanning speed Sn of the standard NTSC system television signal, namely scanning speeds 5Sn, 10Sn and 15Sn of the multiple stages.

The frequency-modulated video signals from the frequency modulators MD-1 to MD-5 are respectively supplied through the amplifiers $A_1$ to $A_5$ to the five pairs of rotary magnetic heads $H_{A1}$, $H_{A2}$; . . .; $H_{E1}$, $H_{E2}$ simultaneously or selectively. On the magnetic tape, 5 adjoining slanting tracks are sequentially formed by the heads $H_{A1}$ to $H_{E1}$ and 5 slanting tracks by the heads $H_{A2}$ to $H_{E2}$, alternately.

Figure 17 shows the arrangement of the rotary magnetic heads $H_{A1}$, $H_{A2}$; . . .; $H_{E1}$, $H_{E2}$. The rotary magnetic heads $H_{A1}$, $H_{A2}$; . . .; $H_{E1}$, $H_{E2}$, each pair having an angular distance of 180° therebetween, are respectively mounted on the rotary drum RD of the tape guide drum GD with an angular distance of 72° and rotated by one revolution at each period of $2/M f_v$, or 30M (Hz) in the clockwise direction in accordance with the value M/2. A tape to be recorded is wrapped around the tape guide drum GD along its external periphery from the point $P_2$ to the point $P_1$ in the anticlockwise direction. The tape wrapping angle is selected to be about 180° or more. The tape transport speed is selected to be 5M times the value $v_t$ of the normal transport speed.

The diameter of the tape guide drum GD is selected in such a manner that the relative speed between

12

the head and the tape becomes equal to that in the case in which five rotary magnetic heads are provided. And, if a tape recorded so as to have a track pattern which can be reproduced by a standard 2-head type VTR is formed and reproduced by the standard VTR at normal playback speed, phenomena moving at high speed can be reproduced in slow motion.

In this embodiment, when the monitor playback rotary magnetic head is provided, it is possible to use a pair of rotary magnetic heads (movable head) having an angular spacing of 180° therebetween.

The embodiments of the present invention set forth above provide recording apparatus for recording a video signal obtained from a high speed scanning video camera which can easily pick up and record phenomena moving at high speed by using a television camera and a VTR.

The embodiments shown in Figures 15 and 16 provide recording apparatus which can easily pick up and record phenomena moving at high speed by using a television camera and a VTR and which can record phenomena moving at high speed with an optimum recording frequency matching the speed of the high speed motion phenomenon.

According to the embodiment shown in Figure 16, when 2N rotary magnetic heads are rotated at a speed of revolution equal to M/2 times the standard speed of revolution, the rotary magnetic heads can trace the magnetic tape with a contact angle larger than that provided when N rotary magnetic heads are rotated at a speed of revolution equal to M times the standard speed of revolution. Thus, it is possible to widen the speed range upon playback to different speeds at which a stable picture can be reproduced.

## Claims

1. A recording apparatus for recording on a magnetic recording tape a video signal obtained from a high speed video camera, the apparatus comprising:

means for driving the magnetic recording tape (TP) at a tape speed faster than that of a standard type of video signal recording apparatus;

means for providing a plurality of channel video signals derived from an image received by the video camera (1);

means (MD-1, etc.) for modulating the channel video signals; and

means for recording the modulated channel video signals on video tracks ($T_A$, etc.) formed on the recording tape (TP) by a corresponding plurality of magnetic transducer heads ($H_A$, etc.) mounted on a cylindrical surface of a rotary drum (RD); characterised in that:

the video signal to be recorded is obtained from a high speed scanning video camera (1) having a scanning speed which is N times (N is an integer) the scanning speed of a standard video camera that generates a standard television video signal;

the driving means is operative to drive the magnetic recording tape (TP) at a tape speed which is N times that of the standard type of video signal recording apparatus;

means (2) are provided for converting the video signal to a digital video signal;

means (e.g. $S_1$, etc.) are provided for dividing the digital video signal to form a plurality of channel digital video signals;

means (M-1, etc.) are provided for expanding a time axis of each of the plurality of channel digital video signals;

means (DA-1, etc.) are provided for converting each of the time axis-expanded digital video signals to an analog video signal (VID-1, etc.) before modulation so that each of the analog video signals has the same frequency band as that of the standard television video signal; and

the recording means is operative to record the modulated analog video signals on succeeding video tracks ($T_A$, etc.) formed on the recording tape (TP) by N magnetic transducer heads ($H_A$, etc.), a diameter (D) and a helix angle ($\theta_H$) of the rotary drum (RD) being smaller and larger, respectively, than those of the standard type of video signal recording apparatus, so that the track angle of the succeeding video tracks ($T_A$, etc.) is made equal to that of the standard type of video signal recording apparatus.

2. Apparatus according to claim 1, in which:

the diameter (D) of the rotating drum (RD) is given by

$$D = \frac{\sqrt{h^2 + (L \cos \theta c - NVt)^2}}{\sqrt{h^2 + (L \cos \theta c - Vt)^2}} \cdot Dc$$

where

h = the length of a video track in a width direction of the tape,

L = the video track length of the standard type of video recording apparatus,

$\theta c$ = the video track angle,

Dc = the diameter of a rotary drum of the standard type of video recording apparatus, and

Vt = the tape speed of the standard type of video recording apparatus; and

the helix angle ($\theta_H$) is given by

$$\theta_H \doteq \sin^{-1} \cfrac{1}{\sqrt{1-2N\cfrac{VT}{h}\cos \theta c}}$$

3. A recording apparatus for recording on a magnetic recording tape a video signal obtained from a high speed video camera, the apparatus comprising:

means for driving the magnetic recording tape (TP) at a tape speed faster than that of a standard type of video signal recording apparatus;

means for providing a plurality of channel video signals derived from an image received by the video camera (1);

means (MD-1, etc.) for modulating the channel video signals; and

means for recording the modulated channel video signals on video tracks ($T_A$, etc.) formed on the recording tape (TP) by a corresponding plurality of magnetic transducer heads ($H_A$, etc; $H_{A1}$, etc.) mounted on a cylindrical surface of a rotary drum (RD); characterised in that:

the video signal to be recorded is obtained from a high speed scanning video camera (1) having a scanning speed which is NM times (N and M are integers) the scanning speed of a standard video camera that generates a standard television video signal;

means are provided for changing the value of M;

the driving means is operative to drive the magnetic recording tape (TP) at a tape speed which is NM times that of the standard type of video signal recording apparatus;

means (2) are provided for converting the video signal to a digital video signal;

means (e.g. $S_1$, etc.) are provided for dividing the digital video signal to form a plurality of channel digital video signals;

means (M-1, etc.) are provided for expanding a time axis of each of the plurality of channel digital video signals;

means (DA-1, etc.) are provided for converting each of the time axis-expanded digital video signals to an analog video signal (VID-1, etc.) before modulation so that each of the analog video signals has the same frequency band as that of the standard television video signal;

the recording means is operative to record the modulated analog video signals on succeeding video tracks ($T_A$, etc.) formed on the recording tape (TP) by mN (m is an integer) magnetic transducer heads ($H_A$, etc.; $H_{A1}$, etc.), a diameter (D) and helix angle ($\theta_H$) of the rotary drum (RD) being smaller and larger, respectively, than those of the standard type of video signal recording apparatus, so that the track angle of the succeeding video tracks ($T_A$, etc.) is made equal to that of the standard type of video signal recording apparatus; and

means are provided for driving the rotary drum (RD) at a speed of rotation which is M/m times the speed of rotation of the standard type of video signal recording apparatus.

4. A recording apparatus according to claim 1, claim 2 or claim 3, comprising a reproducing means having a reproducing head (Hm) mounted on a bimorph leaf (10) which is controlled by a dynamic tracking signal generator (24) for tracking the succeeding video tracks when the tape is driven at the tape speed of the standard type of video signal recording apparatus.

5. A recording apparatus according to claim 4, wherein the dynamic tracking signal generator (24) has N *dc* voltage sources (Ea to Ee) having respective different *dc* voltages and a selecting device ($S_{35}$) for selecting one of the N *dc* voltage sources for adding the voltage to the bimorph leaf (10).

**Patentansprüche**

1. Aufzeichnungsgerät zur Aufzeichnung eines von einer Videokamera mit Hochgeschwindigkeitsabtastung gelieferten Videosignals auf einem magnetischen Aufzeichnungsband

mit Mitteln für den Antrieb des magnetischen Aufzeichnungsbandes (TP) mit einer Geschwindigkeit, die größer ist als die Geschwindigkeit eines Standard-Videosignalaufzeichnungsgeräts,

mit Mitteln zur Erzeugung einer Mehrzahl von Kanal-Videosignalen, die von einem von der Videokamera (1) aufgenommenen Bild abgeleitet sind,

mit Mitteln (MD-1, usw.) zur Modulierung der Kanal-Videosignale

sowie mit Mitteln zur Aufzeichnung der modulierten Kanal-Videosignale auf Videospuren ($T_A$, usw.), die auf dem Aufzeichnungsband (TP) mittels einer entsprechenden Vielzahl von auf einer Zylinderfläche einer drehbaren Trommel (RD) montierten magnetischen Wandlerköpfen ($H_A$, usw.) gebildet sind,

dadurch gekennzeichnet,

daß das aufzuzeichnende Videosignal von einer Videokamera (1) mit Hochgeschwindigkeitsabtastung gewonnen wird, deren Abtastgeschwindigkeit N mal (N ganz) größer ist als die Abtastgeschwindigkeit einer Standard-Videokamera zur Erzeugung eines Standard-Fernsehvideosignals,

daß die Antriebsmittel das magnetische Aufzeichnungsband (TP) mit einer Bandgeschwindigkeit antreiben, die N mal größer ist als die Bandgeschwindigkeit eines Standard-Videosignalaufzeichnungsgeräts,

daß Mittel (2) zur Umwandlung des Videosignals in ein digitales Videosignal vorgesehen sind,

daß Mittel (z.B. $S_1$, usw.) zur Aufteilung des digitalen Videosignals in eine Mehrzahl von digitalen Kanal-Videosignalen vorgesehen sind,

daß Mittel (M-1, usw.) zur Expandierung der Zeitachse jedes einzelnen aus der Mehrzahl von digitalen Kanal-Videosignalen vorgesehen sind,

daß Mittel (DA-1, usw.) vorgesehen sind, die jedes der in ihrer Zeitachse expandierten digitalen Videosignale vor der Modulation in ein analoges Videosignal (VID-1, usw.) derart umwandeln, daß jedes der analogen Videosignale des gleiche Frequenzband besitzt wie ein Standard-Fernsehvideosignal,

und daß die Aufzeichnungsmittel die modulierten analogen Videosignale auf aufeinanderfolgenden Videospuren ($T_A$, usw.) aufzeichnen, die mit Hilfe von N magnetischen Wandlerköpfen ($H_A$, usw.) auf dem Aufzeichnungsband (TP) gebildet werden, wobei der Durchmesser (D) und der Helixwinkel ($\theta_H$) der drehbaren Trommel (RD) kleiner bzw. größer sind als bei einem Standard-Videosignalaufzeichnungsgerät, derart daß der Spurwinkel der aufeinanderfolgenden Videospuren ($T_A$, usw.) gleich demjenigen eines Standard-Videosignalaufzeichnungsgeräts ist.

2. Gerät nach Anspruch 1, bei dem der Durchmesser (D) der drehbaren Trommel (RD) durch

$$D = \frac{\sqrt{h^2 + (L \cos \theta c - NVt)^2}}{\sqrt{h^2 + (L \cos \theta c - Vt)^2}} \cdot Dc$$

mit

h = Länge einer Videospur in Breitenrichtung des Bandes
L = Länge der Videospur bei einem Standard-Videosignalaufzeichnungsgerät
$\theta c$ = Videospurwinkel
Dc = Durchmesser einer drehbaren Trommel eines Standard-Videosignalaufzeichnungsgeräts und
Vt = Bandgeschwindigkeit eines Standard-Videosignalaufzeichnungsgeräts)
und der Helixwinkel ($\theta_H$) durch

$$\theta_H \doteq \sin^{-1} \frac{1}{\sqrt{1 - 2N \frac{VT}{h} \cos \theta c}}$$

gegeben sind.

3. Aufzeichnungsgerät zur Aufzeichnung eines von einer Videokamera mit Hochgeschwindigkeitsabtastung gelieferten Videosignals auf einem magnetischen Aufzeichnungsband

mit Mitteln für den Antrieb des magnetischen Aufzeichnungsbandes (TP) mit einer Geschwindigkeit, die größer ist als die Geschwindigkeit eines Standard-Videosignalaufzeichnungsgeräts,

mit Mitteln zur Erzeugung einer Mehrzahl von Kanal-Videosignalen, die von einem von der Videokamera (1) aufgenommenen Bild abgeleitet sind,

mit Mitteln (MD-1, usw.) zur Modulierung der Kanal-Videosignale

sowie mit Mitteln zur Aufzeichnung der modulierten Kanal-Videosignale auf Videospuren ($T_A$, usw.), die auf dem Aufzeichnungsband (TP) mittels einer entsprechenden Vielzahl von auf einer Zylinderfläche einer drehbaren Trommel (RD) montierten magnetischen Wandlerköpfen ($H_A$, usw.) gebildet sind,

dadurch gekennzeichnet,

daß das aufzuzeichnende Videosignal von einer Videokamera (1) mit Hochgeschwindigkeitsabtastung gewonnen wird, deren Abtastgeschwindigkeit NM mal (N und M ganz) größer ist als die Abtastgeschwindigkeit einer Standard-Videokamera zur Erzeugung eines Standards-Fernsehvideosignals,

daß Mittel zur Änderung des Werts von M vorgesehen sind,

daß die Antriebsmittel das magnetische Aufzeichnungsband (TP) mit einer Bandgeschwindigkeit antreiben, die NM mal größer ist als die Bandgeschwindigkeit eines Standard-Videosignalaufzeichnungsgeräts,

daß Mittel (2) zur Umwandlung des Videosignals in ein digitales Videosignal vorgesehen sind,

daß Mittel (z.B. $S_1$, usw.) zur Aufteilung des digitalen Videosignals in mehrere digitale Kanal-Videosignale vorgesehen sind,

daß Mittel (M-1, usw.) zur Expandierung der Zeitachse jedes aus der Mehrzahl von digitalen Kanal-Videosignalen vorgesehen sind,

daß Mittel (DA-1, usw.) vorgesehen sind, die jedes der in ihrer Zeitachse expandierten digitalen Videosignale vor der Modulation in ein analoges Videosignal (VID-1, usw.) derart umwandeln, daß jedes der analogen Videosignale das gleiche Frequenzband besitzt wie ein Standard-Fernsehvideosignal,

daß die Aufzeichnungsmittel die modulierten analogen Videosignale auf aufeinanderfolgende Videospuren ($T_A$, usw.) aufzeichnen, die mit Hilfe von mN (m ganz) magnetischen Wandlerköpfen ($H_A$, usw.; $H_{A1}$, usw.) auf dem Aufzeichnungsband (TP) gebildet werden, wobei der Durchmesser (D) und der Helixwinkel ($\theta_H$) der drehbaren Trommel (RD) kleiner bzw. größer sind als bei einem Standard-Videosignal-

15

aufzeichnungsgerät, derart daß der Spurwinkel der aufeinanderfolgenden Videospuren ($T_A$, usw.) gleich demjenigen eines Standard-Videosignalaufzeichnungsgeräts ist,

und daß Mittel für den Antrieb der drehbaren Trommel (RD) mit einer Drehgeschwindigkeit vorgesehen sind, die M/m mal so groß ist wie die Drehgeschwindigkeit eines Standard-Videosignalaufzeichnungsgeräts.

4. Aufzeichnungsgerät nach Anspruch 1, 2 oder 3 mit einer Wiedergabeeinrichtung mit einem Videokopf (Hm), der auf einer bimorphen Platte (10) montiert ist, die durch einen dynamischen Spursignalgenerator (24) gesteuert wird, um die aufeinanderfolgenden Videospuren abzutasten, wenn das Band mit der Bandgeschwindigkeit eines Standard-Videosignalaufzeichnungsgeräts angetrieben wird.

5. Aufzeichnungsgerät nach Anspruch 4, bei dem der dynamische Spursignalgenerator (24) N Gleichspannungsquellen (Ea bis Ee) mit jeweils unterschiedlichen Gleichspannungen sowie eine Auswahleinrichtung ($S_{35}$) zur Auswahl einer der N Gleichspannungsquellen für die Addition deren Spannung zur bimorphen Platte (10) aufweist.

**Revendications**

1. Appareil d'enregistrement, sur une bande d'enregistrement magnétique, d'un signal vidéo obtenu d'une caméra vidéo à grande vitesse, l'appareil comportant: un dispositif d'entrainement de la bande d'enregistrement magnétique (TP) à une vitesse de bande supérieure à celle d'un type standard d'appareil d'enregistrement de signal vidéo; un dispositif produisant plusieurs signaux vidéo de canaux dérivés d'une image reçue par la caméra vidéo (1); un dispositif (MD-1, etc.) de modulation des signaux vidéo de canaux; et un dispositif d'enregistrement des signaux vidéo de canaux modulés sur des pistes vidéo ($T_1$, etc.) formées sur la bande d'enregistrement (TP) par un nombre correspondant de têtes de transducteurs magnétiques ($H_A$, etc.) montées sur une surface cylindrique d'un tambour tournant (RD); caractérisé en ce que: le signal vidéo à enregistrer est obtenu d'une caméra vidéo (1) à balayage à grande vitesse ayant une vitesse de balayage qui est N fois (N est un nombre entier) la vitesse de balayage d'une caméra vidéo standard qui produit un signal vidéo de télévision standard; le dispositif d'entrainement a pour fonction d'entrainer la bande d'enregistrement magnétique (TP) à une vitesse de bande qui est N fois celle du type standard d'appareil d'enregistrement de signal vidéo; un dispositif (2) est prévu pour convertir le signal vidéo en un signal vidéo numérique; un dispositif (par exemple $S_1$, etc.) est prévu pour diviser le signal vidéo numérique de manière à former plusieurs signaux vidéo numériques de canaux; un dispositif (M-1, etc.) est prévu pour étendre l'axe des temps de chacun des plusieurs signaux vidéo numériques de canaux; un dispositif (DA-1, etc.) est prévu pour convertir chacun des signaux vidéo numériques d'axe des temps expansé en un signal vidéo analogique (VID-1, etc.) avant leur modulation de manière que chacun des signaux vidéo analogique ait la même bande de fréquence que celle d'un signal vidéo de télévision standard; et le dispositif d'enregistrement a pour fonction d'enregistrer les signaux vidéo analogiques modulés sur des pistes vidéo successives ($T_A$, etc.) formées sur la bande d'enregistrement (TP) par N têtes de transducteurs magnétiques ($H_A$, etc.), le diamètre (D) et l'angle d'hélice ($\theta_H$) du tambour tournant (RD) étant respectivement plus petit et plus grand que ceux du type standard d'appareil d'enregistrement de signal vidéo de manière que l'angle des pistes vidéo successives ($T_A$, etc.) soit égal à celui du type standard d'appareil d'enregistrement de signal vidéo.

2. Appareil selon la revendication 1, dans lequel: le diamètre (D) du tambour tournant (RD) est donné par:

$$D = \frac{\sqrt{h^2+(L\ \cos\ \theta c - NVt)^2}}{\sqrt{h^2+(L\ \cos\ \theta c - Vt)^2}} \cdot DC$$

où

h = la longueur d'une piste vidéo dans la direction de la largeur de la bande,
L = la longueur d'une piste vidéo du type standard d'appareil d'enregistrement vidéo,
$\theta c$ = angle de piste vidéo,
Dc = diamètre du tambour tournant du type standard d'appareil d'enregistrement vidéo, et
Vt = vitesse de bande du type standard d'appareil d'enregistrement vidéo; et
l'angle d'hélice ($\theta_H$) est donné par:

$$\theta_H \doteq \sin^{-1}\frac{1}{\sqrt{1-2N\dfrac{VT}{h}\cos\ \theta c}}$$

3. Appareil d'enregistrement sur une bande d'enregistrement magnétique d'un signal vidéo obtenu d'une caméra vidéo à grande vitesse, l'appareil comportant: un dispositif d'entrainement de la bande d'enregistrement (TP) à une vitesse de bande plus élevée que celle d'un type standard d'appareil d'enregistrement de signal vidéo; un dispositif produisant plusieurs signaux vidéo de canaux dérivés d'une image reçue par la caméra vidéo (1); un dispositif (MD-1, etc.) de modulation des signaux vidéo de canaux; et un dispositif d'enregistrement des signaux vidéo de canaux modulés sur des pistes vidéo (T$_A$, etc.) formées sur la bande d'enregistrement (TP) par un nombre correspondant de têtes de transducteurs magnétiques (H$_A$, etc.; H$_{A1}$, etc.) montées sur la surface cylindrique d'un tambour tournant (RD); caractérisé en ce que le signal vidéo à enregistrer est obtenu d'une caméra vidéo (1) à balayage à grande vitesse ayant une vitesse de balayage qui est NM fois (N et M sont des nombres entiers) la vitesse de balayage d'une caméra vidéo standard qui produit un signal vidéo de télévision standard; un dispositif est prévu pour changer la valeur de M; le dispositif d'entrainement entraine la bande d'enregistrement magnétique (TP) à une vitesse de bande qui est NM fois celle du type standard d'appareil d'enregistrement de signal vidéo; un dispositif (2) est prévu pour convertir le signal vidéo en un signal vidéo numérique; un dispositif (par exemple S$_1$, etc.) est prévu pour diviser le signal vidéo numérique de manière à former plusieurs signaux vidéo numériques de canaux; un dispositif (M-1, etc.) est prévu pour étendre l'axe des temps de chacun des plusieurs signaux vidéo numériques de canaux; un dispositif (DA-1, etc.) est prévu pour convertir chacun des signaux vidéo numériques d'axe des temps étendu en un signal vidéo analogique (VID-1, etc.) avant sa modulation de manière que chacun des signaux vidéo analogiques ait la même bande de fréquence que celle du signal vidéo de télévision standard; le dispositif d'enregistrement a pour fonction d'enregistrer les signaux vidéo analogiques modulés sur des pistes vidéo successives (T$_A$, etc.) formées sur la bande d'enregistrement (TP) par mN (m est un nombre entier) têtes de transducteurs magnétiques (H$_A$, etc.; H$_{A1}$, etc.), le diamètre (D) et l'angle d'hélice ($\theta_H$), du tambour tournant (RD) étant respectivement plus petit et plus grand que ceux du type standard d'appareil d'enregistrement de signal vidéo de manière que l'angle de piste des pistes vidéo successives (T$_A$, etc.) soit égal à celui du type standard d'appareil d'enregistrement de signal vidéo; et un dispositif est prévu pour entrainer le tambour tournant (RD) à une vitesse de rotation qui est M/m fois la vitesse de rotation du type standard d'appareil d'enregistrement de signal vidéo.

4. Appareil d'enregistrement selon la revendication 1, la revendication 2 ou la revendication 3, comportant un dispositif de reproduction ayant une tête de reproduction (Hm) montée sur une lame bimorphe (10) qui est commandée par un générateur de signal d'alignement dynamique (24) pour suivre les pistes vidéo successives quand la bande est entrainée à la vitesse de bande du type standard d'appareil d'enregistrement de signal vidéo.

5. Appareil d'enregistrement selon la revendication 4, dans lequel le générateur de signal d'alignement dynamique (24) comporte N sources de tension continue (Ea à Ee) ayant des tensions continues différentes respectives et un dispositif de sélection (S$_{35}$) pour sélectionner l'une des N sources de tension continue afin d'additionner la tension à la lame bimorphe (10).

FIG. 1

0 120 696

FIG. 2

| | T1 | T2 | T3 | T4 | T5 | T6 | T7 | T8 | T9 | T10 | T11 | T12 | T13 | T14 | T15 | T16 | T17 | T18 |
|---|---|---|---|---|---|---|---|---|---|---|---|---|---|---|---|---|---|---|

M−1  W$_{1N}$  R$_{1N}$(VID−1)  W$_{1(N+1)}$  R$_{1(N-1)}$

M−2  R$_{2(N-1)}$ W$_{2N}$  R$_{2N}$(VID−2)  W$_{2(N+1)}$

M−3  R$_{3(N-1)}$ W$_{3N}$  R$_{3N}$(VID−3)  W$_{3(N+1)}$

M−4  R$_{4(N-1)}$ W$_{4N}$  R$_{4N}$(VID−4)  W$_{4(N+1)}$

M−5  R$_{5(N-1)}$ W$_{5N}$  R$_{5N}$(VID−5)  W$_{5(N+1)}$

M−6  R$_{6(N-1)}$ W$_{6N}$  R$_{6N}$(VID−1)  W$_{6(N+1)}$

M−7  R$_{7(N-1)}$ W$_{7N}$  R$_{7N}$(VID−2)  W$_{7(N+1)}$

M−8  R$_{8(N-1)}$ W$_{8N}$  R$_{8N}$(VID−3)  W$_{8(N+1)}$

M−9  R$_{9(N-1)}$ W$_{9N}$  R$_{9N}$(VID−4)  W$_{9(N+1)}$

M−10  R$_{10(N-1)}$ W$_{10N}$  R$_{10N}$(VID−5)

0 120 696

# FIG. 3A

# FIG. 3B

*FIG. 4*

*FIG. 5*

## FIG. 6

$TP$

$T_A$ $H_A$ $T_B$ $T_C$ $T_D$ $T_E$ $T_A$

$H_B$

$H_C$

$H_D$

$H_E$

$\theta_C$ $\theta_H$

$T_{CTL}$

## FIG. 7

1

2

4

5'

VID-1
VID-2
VID-3
VID-4
VID-5

## F.I.G. 8

0 120 696

| | T1 | T2 | T3 | T4 | T5 | T6 | T7 | T8 | T9 | T10 | T11 | T12 | T13 | T14 | T15 | T16 | T17 | T18 |
|---|---|---|---|---|---|---|---|---|---|---|---|---|---|---|---|---|---|---|
| M-1 | W1N | R1N(VID-1) | | | | | | W1(N+1) | R1(N+1)(VID-2) | | | | | W1(N+2) | R1(N+2)(VID-3) | | | |
| M-2 | | W2N | R2N(VID-2) | | | | | | W2(N+1) | R2(N+1)(VID-3) | | | | | W2(N+2) | R2(N+2)(VID-4) | | |
| M-3 | | | W3N | R3N(VID-3) | | | | | | W3(N+1) | R3(N+1)(VID-4) | | | | | W3(N+2) | R3(N+2)(VID-5) | |
| M-4 | | | | W4N | R4N(VID-4) | | | | | | W4(N+1) | R4(N+1)(VID-5) | | | | | | |
| M-5 | | | | | W5N | R5N(VID-5) | | | | | | W5(N+1) | R5(N+1)(VID-1) | | | | | |
| M-6 | | | | | | W6N | R6N(VID-1) | | | | | | W6(N+1) | R6(N+1)(VID-2) | | | | |

# FIG. 9A

# FIG. 9B

F I G. 10

FIG. 12

FIG. 13

0 120 696

# F I G. 14

| | T1 | T2 | T3 | T4 | T5 | T6 | T7 | T8 | T9 | T10 | T11 | T12 |
|---|---|---|---|---|---|---|---|---|---|---|---|---|
| M—1 | W1N | | | R1N(VID—1) | | | | W(N+1) | | R1(N+1) | | |
| M—2 | | W2N | | | R2N(VID—2) | | | W2(N+1) | | | | |
| M—3 | | | W3N | | | R3N(VID—3) | | | W3(N+1) | | | |
| M—4 | | | | W4N | | | R4N(VID—1) | | | W4(N+1) | | |
| M—5 | | | | | W5N | | | R5N(VID—2) | | | W5(N+1) | |
| M—6 | | | | | | W6N | | | R6N(VID—3) | | | |

# F I G. 17

12

*F I G. 15*

FIG. 16